# FASCICULE DE BREVET EUROPEEN

(11) **EP 1 717 478 B1**
(45) Date de publication et mention de la délivrance du brevet: **17.06.2009**
(21) Numéro de dépôt: 06300272.9
(22) Date de dépôt: 23.03.2006
(51) Int. Cl.: F16F 9/49, F16F 9/58

(54) **Système de butée hydraulique d'un véhicule automobile**
Hydraulisches Anschlagsystem für Kraftfahrzeuge
Hydraulic impact system for motor vehicles

(30) Priorité: 29.04.2005 FR 0551117
(43) Date de publication de la demande: 02.11.2006
(73) Titulaire: RENAULT S.A.S., 92100 Boulogne Billancourt (FR)
(72) Inventeur: Lefebvre, Bertrand, 92340, Bourg la Reine (FR)

(56) Documents cités:
- EP-A- 1 375 957
- WO-A-03/081077
- DE-A1- 19 944 183
- FR-A- 2 505 003
- FR-A- 2 851 808
- US-A- 3 889 934
- US-A- 5 927 448

## Description

La présente invention concerne un système de butée hydraulique de fin de course destinée aux amortisseurs hydrauliques de véhicules automobiles. Elle concerne plus particulièrement un système de butée hydraulique, dans lequel un piston de butée coulisse à l'intérieur d'un corps de butée dans lequel un fluide est compressé par l'action du piston, des moyens d'amortissement permettant de faire varier l'action du fluide sur le déplacement du piston à l'intérieur du corps de butée

Une telle butée vise à amortir le déplacement du piston de l'amortisseur à l'intérieur du corps d'amortisseur avant que le piston ait atteint le point de compression maximale. Cet amortissement est particulièrement important lorsque le véhicule subit un choc dû au passage sur une bosse ou dans un trou, le piston s'enfonçant à haute vitesse dans le corps de l'amortisseur jusqu'à atteindre dans certains cas le maximum de sa course. A cette occasion, un impact peut être néfaste au bon fonctionnement ultérieur de l'amortisseur et la présence d'une butée vise à amortir et empêcher cet impact en fin de course.

Il est connu par la demande FR 2851808 un système d'amortisseur permettant un arrêt progressif de la tige vérin de l'amortisseur par l'intermédiaire d'un logement interne du corps de butée symétrique de révolution et pourvu d'une portion d'entrée tronconique suivie de plusieurs portions tronconiques de conicités décroissantes, de sorte qu'une fraction du volume d'huile présent dans le corps de butée reflue entre le piston et le corps, cette fraction diminuant au fur et à mesure de l'avancée du piston, permettant ainsi de générer une résistance à l'enfoncement croissante. La réalisation des conicités décroissantes à l'intérieur du corps de butée est difficile à mettre en oeuvre, et ne permet pas la modification du nombre de conicités distinctes une fois le corps de butée usiné.

Le document DE 199 44 183 présente lui aussi un amortisseur avec un système de butée, ce système de butée comportant des orifices.

Le but de la présente invention est de pallier les inconvénients de l'art antérieur en proposant un système de butée permettant une progressivité efficace de l'effort d'enfoncement et dont le mode de réalisation est simplifié et qui permet en outre un ajustement aisé des caractéristiques d'amortissement.

Cet objectif est atteint par un système de butée tel que décrit précédemment, dans lequel les moyens d'amortissement comportent des orifices réalisés dans l'épaisseur du corps de butée de sorte que du fluide puisse refluer hors du corps de butée par ces orifices, dans lequel le piston est formé d'une tête de piston et d'un porte piston, la tête de piston étant muni d'un alésage de sorte que la tête de piston est apte à coulisser le long d'un axe porté par un porte piston, entre un épaulement formé par le porte piston et une vis montée à l'extrémité de l'axe, la vis étant de dimension supérieure à l'alésage de la tête de piston pour permettre l'arrêt en translation de la tête de piston, et dans lequel des conduits sont formés sur le pourtour de l'alésage, de sorte que ces conduits permettent le passage du fluide quand la tête de piston est en appui contre la vis.

Selon différentes caractéristiques de l'invention :
- des orifices sont disposés à des distances distinctes de l'extrémité inférieure du corps de butée, de sorte que, lors de l'enfoncement du piston à l'intérieur du logement dans le corps de butée, le piston recouvre progressivement les orifices ;
- la position des orifices est telle que le piston, en fin de course dans le logement, recouvre l'ensemble des orifices ;
- le piston et le logement présentent des dimensions aptes à permettre le refoulement du fluide hors du logement lorsque le piston est en fin de course dans le logement ;
- des orifices sont symétriques par rapport au plan de symétrie du corps de butée ;
- le corps de butée présente une extrémité inférieure ouverte, le logement interne généré permettant le coulissement du piston, et en ce que l'extrémité inférieure du corps de butée présente une portion de forme tronconique ;
- le piston présente une portion supérieure de forme tronconique, complémentaire de la forme tronconique du corps de butée ;

D'autres caractéristiques et avantages de l'invention apparaîtront à la lecture de la description détaillée qui suit pour la compréhension de laquelle on se reportera aux dessins annexés dans lesquels :
- la figure 1 est une représentation schématique d'un système de butée d'amortisseur selon un premier mode de réalisation de l'invention ;
- la figure 2 est une représentation schématique d'un corps de butée et d'un piston de butée associé selon un mode de réalisation particulier de l'invention ;
- la figure 3 est une vue en coupe du piston représenté à la figure 2.

Tel que représenté sur les figures, un système de butée 1 selon l'invention est disposé à l'intérieur d'un amortisseur 3, ce système de butée 1 comportant un piston de butée 2 apte à coulisser à l'intérieur d'un corps de butée 4. Un fluide visqueux, à titre d'exemple de l'huile, est présent dans l'amortisseur 3 et en particulier à l'intérieur du corps de butée 4 de sorte que ce fluide est compressé lors de l'insertion du piston 2 dans le corps de butée 4 et génère une résistance à l'enfoncement du piston 2.

Le piston de butée hydraulique 2 est un piston dont une partie supérieure est de forme extérieure cylindrique 20 surmontée par une portion de forme tronconique 22. Ce piston de butée 2 est destiné à coopérer avec le corps de butée 4 dont l'extrémité inférieure 5 est ouverte pour former un logement 6 apte à permettre et guider le coulissement du piston 2. La surface interne du logement 6 est une surface cylindrique de révolution correspondante à la surface extérieure 20 du piston 2, le diamètre intérieur du corps de butée 4 étant légèrement supérieur au diamètre extérieur du piston 2. La partie inférieure du logement 6 présente une portion de forme tronconique 8, complémentaire de la portion de forme tronconique 22 du piston 2. La présence de deux portions de forme tronconique complémentaires 22, 8 facilite le guidage du piston 2 à l'intérieur du corps de butée 4. Il sera toutefois compris que ces portions tronconiques 22, 8 ont pour rôle de faciliter le fonctionnement du système de butée 1 et ne sont pas limitatives.

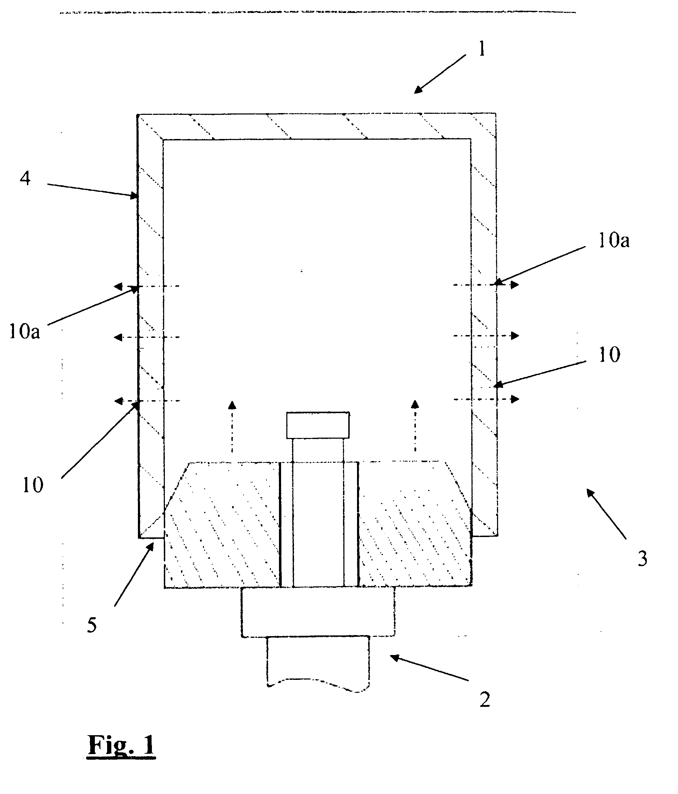

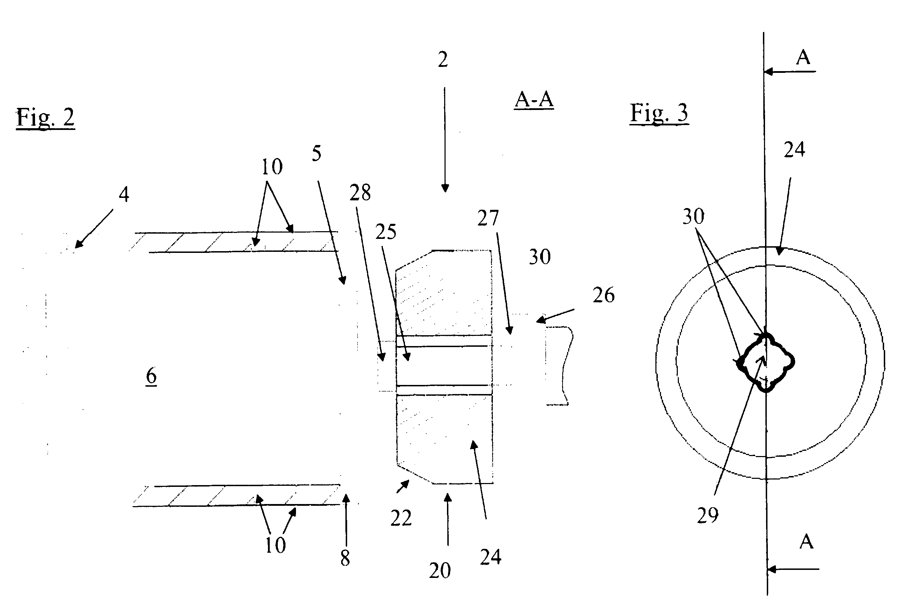

Lors de l'enfoncement du piston 2 dans le logement 6, correspondant à une compression du système hydraulique de suspension, par exemple lorsque le véhicule rencontre une déformation de la chaussée, le piston de butée 2 emprisonne un volume de fluide contenu dans le logement 6 et le comprime progressivement, ce qui crée une résistance à l'enfoncement du piston de butée 2. Tel que représenté aux figures 1 et 2, des orifices 10 sont réalisés sur le pourtour du logement 6 dans l'épaisseur du corps de butée 4, de sorte que dans l'amortisseur 3, le logement 6 situé à l'intérieur du corps de butée 4 communique avec le pourtour extérieur de ce corps 4. Lors de l'enfoncement du piston 2 dans le logement 6, l'effort de compression généré sur le fluide tend à diriger ce fluide vers les orifices 10, de sorte qu'une partie du fluide s'évacue à l'extérieur du logement 6 (cf. flèches de la figure 1). Au début de la progression du piston à l'intérieur du logement 6, l'ensemble des orifices 10 est accessible et du fluide peut s'évacuer par chacun de ces orifices 10. Au fur et à mesure de cette progression, le piston 2 couvre des orifices et le fluide encore présent dans le logement 6 peut refluer hors du logement par un nombre limité d'orifice 10. De ce fait, le volume de fluide refluant est de plus en plus faible, augmentant ainsi progressivement la résistance à l'enfoncement du piston de butée 2.

Lorsque l'ensemble des orifices 10 est recouvert par le piston, le fluide restant, très faiblement compressible, permet d'obtenir une résistance très importante en fin de course, et tend ainsi à empêcher l'impact du piston 2 dans le logement 6. Afin d'optimiser les caractéristiques de résistance à l'enfoncement en fin de course, les dimensions du logement 6 et du piston 2 peuvent être agencées pour permettre une fuite déterminée du fluide entre le piston 2 et le logement 6. Une partie du fluide, contenue encore dans le logement 6 lorsque l'intégralité des orifices de progressivité 10 est recouverte, peut alors se glisser entre le piston 2 et le logement 6 pour refluer vers l'extérieur du logement 6 par l'intermédiaire de l'orifice 10a situé le plus haut dans le logement 6, ou par l'extrémité inférieure ouverte 5 du corps de butée 4.

Sur les exemples représentés aux figures 1 et 2, les orifices 10 sont symétriques par rapport au plan de symétrie du corps de butée, et sont au nombre de deux ou trois entre l'extrémité inférieure 5 du corps de butée 4 et le fond du logement 6. Il sera toutefois compris que le nombre, la position ou la forme des orifices 10 peuvent varier d'un mode de réalisation à l'autre. De même, la forme interne du logement 6 et la forme externe du piston 2 sont dans l'exemple présent cylindrique de révolution, mais pourront présenter d'autres formes complémentaires sans sortir du contexte de l'invention.

Les orifices 10 selon l'invention forment un moyen d'amortissement permettant de faire varier l'action du fluide sur le déplacement du piston 2 à l'intérieur du corps de butée 4, des modifications pouvant être facilement apportées à ce moyen d'amortissement si les valeurs d'amortissement sont jugées inadéquates. Il suffit alors de boucher des orifices ou en créer de nouveaux dans l'épaisseur du corps de butée.

La partie de fluide refluée hors du corps de butée 4, par les orifices 10 ou par l'extrémité inférieure ouverte 5, est disponible à l'intérieur de l'amortisseur 3. Lors de la phase de détente de l'amortisseur et du système de butée 1 associé, le retrait progressif du piston 2 hors du logement 6 crée une dépression à l'intérieur du logement 6 qui tend à entraîner le retour du fluide dans le logement du corps de butée 4, par l'intermédiaire des orifices 10 ou par l'extrémité inférieure ouverte 5 du corps de butée 4. Le système de butée 1 est alors prêt pour amortir à nouveau l'insertion du piston 2 dans le logement 6 lors d'un nouveau choc subi par le véhicule.

Afin de ne pas impacter la rapidité de la détente du système, le piston 2 intègre une fonction de clapet anti-retour, afin de libérer des passages pour le fluide dès que le déplacement du piston de l'amortisseur s'inverse. Selon l'invention, le piston de butée 2 est formé d'une tête de piston 24 sensiblement cylindrique et qui comprend à son extrémité supérieure la portion tronconique 22. Cette tête de piston 24 est montée coulissante sur un axe 25 porté par un porte piston 26, de sorte que la tête de piston 24 peut coulisser le long de cet axe 25 d'une position basse, dans laquelle la tête 24 est au contact d'un épaulement 27 du porte piston 26, vers une position haute, dans laquelle la tête 24 vient au contact d'une vis 28 montée à l'extrémité de l'axe 25 opposée à l'épaulement 27. La tête de piston 24 présente en son centre un alésage 29 de diamètre légèrement supérieur au diamètre de l'axe 25 du porte piston 26 pour permettre le déplacement de la tête de piston 24 le long de l'axe 25. La vis 28, montée à l'extrémité de l'axe 25 du porte piston 26 lorsque le piston 2 est en position, vient recouvrir la totalité de cet alésage 29 et permet ainsi l'arrêt en translation de la tête de piston. Des conduits 30 sont réalisés sur le pourtour de cet alésage 29, sur toute la hauteur de la tête de piston 24, de sorte que lorsque la tête de piston 24 est en appui contre la vis 28, ces conduits 30 ne sont pas obturés par la vis 28 et autorisent l'entrée de fluide à l'intérieur de l'alésage 29.

Lorsque la tête de piston 24 est en appui contre le porte piston 26, c'est-à-dire lors de l'insertion de la tête de piston 24 dans le logement 6 du corps de butée 4, du fluide compressé à l'intérieur du logement 6 s'insère dans l'alésage 29 et les conduits 30. Ce fluide est alors bloqué par le porte piston 26, et cette contrainte participe à l'amortissement du déplacement du piston 2 dans le corps de butée 4.

Lorsque le sens de déplacement du piston de butée 2 est inversé, la tête de piston 24 coulisse le long de l'axe 25 du porte piston 26 pour venir en appui contre la vis 28 montée à l'extrémité de l'axe 25, et se décolle de l'épaulement 27 du porte piston 26. La vis 28 ne couvrant pas les conduits 30 usinés sur le pourtour de l'alésage 29, le fluide présent dans l'alésage 29 de la tête de piston 24, ainsi que le fluide présent dans l'amortisseur 3 à l'extérieur du corps de butée 4, est alors aspiré vers l'intérieur du logement et s'écoule par l'intermédiaire de ces conduits 30.

L'invention n'est nullement limitée au mode de réalisation décrit et illustré qui n'a été donné qu'à titre d'exemple.

## Revendications

1. Système de butée hydraulique (1) d'un véhicule automobile, dans lequel un piston de butée (2) coulisse à l'intérieur d'un corps de butée (4) dans lequel un fluide est compressé par l'action du piston (2), des moyens d'amortissement permettant de faire varier l'action du fluide sur le déplacement du piston (2) à l'intérieur du corps de butée (4), ces moyens d'amortissement comportant des orifices (10) réalisés dans l'épaisseur du corps de butée (4) de sorte que du fluide peut refluer hors du corps de butée (4) par ces orifices (10), **caractérisé en ce que** le piston (2) est formé d'une tête de piston (24) et d'un porte piston (26), la tête de piston (24) étant muni d'un alésage (29) de sorte que la tête de piston (24) est apte à coulisser le long d'un axe (25) porté par le porte piston (26), **en ce que** piston (2) coulisse le long de l'axe (25) entre un épaulement (27) formé par le porte piston (26) et un écrou (28) monté à l'extrémité de l'axe, l'écrou (28) étant de dimension supérieure à l'alésage de la tête de piston (24) pour permettre l'arrêt en translation de la tête de piston (24), et **en ce que** des conduits (30) sont formés sur le pourtour de l'alésage (29), de sorte que ces conduits (30) permettent le passage du fluide quand la tête de piston (24) est en appui contre l'écrou (28).

2. Système de butée selon la revendication 1, **caractérisé en ce que** des orifices (10) sont disposés à des distances distinctes de l'extrémité inférieure (5) du corps de butée (4), de sorte que, lors de l'enfoncement du piston (2) à l'intérieur du logement (6) formé dans le corps de butée (4), le piston (2) recouvre progressivement les orifices (10).

3. Système de butée selon la revendication 1, **caractérisé en ce que** la position des orifices (10) est telle que le piston (2), en fin de course dans le logement (6), recouvre l'ensemble des orifices (10).

4. Système de butée selon la revendication 1, **caractérisé en ce que** le piston (2) et le logement (6) présentent des dimensions aptes à permettre le refoulement du fluide hors du logement (6) lorsque le piston (2) est en fin de course dans le logement (6).

5. Système de butée selon l'une des revendications précédentes, **caractérisé en ce que** des orifices (10) sont symétriques par rapport au plan de symétrie du corps de butée (4).

6. Système de butée selon l'une des revendications 1 à 5, **caractérisé en ce que** le corps de butée (4) présente une extrémité inférieure ouverte (5), le logement (6) interne généré permettant le coulissement du piston (2), et **en ce que** l'extrémité inférieure du corps de butée (4) présente une portion de forme tronconique (8).

7. Système de butée selon la revendication 6, **caractérisé en ce que** le piston (2) présente une portion supérieure de forme tronconique (22), complémentaire de la portion de forme tronconique (8) du corps de butée (4).

## Claims

1. Hydraulic stop system (1) of a motor vehicle, in which a stop piston (2) slides inside a stop body (4) in which a fluid is compressed by the action of the piston (2), damping means making it possible to vary the action of the fluid on the movement of the piston (2) inside the stop body (4), these damping means comprising orifices (10) made in the thickness of the stop body (4) such that fluid can flow back out of the stop body (4) through these orifices (10),
**characterized in that** the piston (2) is formed by a piston head (24) and by a piston carrier (26), the piston head (24) being provided with a bore (29) such that the piston head (24) is able to slide along a shaft (25) borne by the piston carrier (26), **in that** the piston (2) slides along the shaft (25) between a shoulder (27), formed by the piston carrier (26), and a nut (28) mounted at the end of the shaft, the nut (28) having a larger size than the bore in the piston head (24) so as to make it possible to arrest the translational movement of the piston head (24), and **in that** ducts (30) are formed around the periphery of the bore (29) such that these ducts (30) allow fluid to pass through when the piston head (24) is bearing against the nut (28).

2. Stop system according to Claim 1, **characterized in that** some orifices (10) are arranged at different distances from the lower end (5) of the stop body (4) such that, during the insertion of the piston (2) inside the housing (6) formed in the stop body (4), the piston (2) progressively covers the orifices (10).

3. Stop system according to Claim 1, **characterized in that** the position of the orifices (10) is such that, at the end of its stroke in the housing (6), the piston (2) covers all the orifices (10).

4. Stop system according to Claim 1, **characterized in that** the piston (2) and the housing (6) have dimensions designed to enable the fluid to be discharged from the housing (6) when the piston (2) is at the end of its stroke in the housing (6).

5. Stop system according to one of the preceding claims, **characterized in that** some orifices (10) are symmetrical with respect to the plane of symmetry of the stop body (4).

6. Stop system according to one of Claims 1 to 5, **characterized in that** the stop body (4) has an open lower end (5), the generated internal housing (6) allowing the piston (2) to slide, and **in that** the lower end of the stop body (4) has a portion of frustoconical shape (8).

7. Stop system according to Claim 6, **characterized in that** the piston (2) has an upper portion of frustoconical shape (22) that is complementary with the portion of frustoconical shape (8) of the stop body (4).

## Patentansprüche

1. Hydraulisches Anschlagsystem (1) eines Kraftfahrzeugs, bei dem ein Anschlagkolben (2) im Inneren eines Anschlagkörpers (4) gleitet, in dem ein Fluid durch Wirkung des Kolbens (2) komprimiert wird, wobei Dämpfungsmittel gestatten, die Wirkung des Fluids auf die Verschiebung des Kolbens (2) im Inneren des Anschlagkörpers (4) zu ändern, wobei diese Dämpfungsmittel Öffnungen (10) aufweisen, die in der Dicke des Anschlagkörpers (4) ausgebildet sind, damit Fluid durch diese Öffnungen (10) aus dem Anschlagkörper (4) zurückströmen kann, **dadurch gekennzeichnet, dass** der Kolben (2) aus einem Kolbenkopf (24) und einem Kolbenträger (26) besteht, wobei der Kolbenkopf (24) mit einer Bohrung (29) versehen ist, so dass der Kolbenkopf (24) entlang einer von dem Kolbenträger (26) getragenen Achse (25) gleiten kann, der Kolben (2) zwischen einer durch den Kolbenträger (26) gebildeten Schulter (27) und einer am Ende der Achse angebrachten Mutter (28) entlang der Achse (25) gleitet, wobei die Mutter (28) eine größere Abmessung als die Bohrung des Kolbenkopfs (24) aufweist, um das Anhalten der translatorischen Bewegung des Kolbenkopfs (24) zu gestatten, und Leitungen (30) um den Umfang der Bohrung (29) herum ausgebildet sind, so dass diese Leitungen (30) das Passieren des Fluids gestatten, wenn der Kolbenkopf (24) an der Mutter (28) anliegt.

2. Anschlagsystem nach Anspruch 1, **dadurch gekennzeichnet, dass** Öffnungen (10) in verschiedenen Abständen von dem unteren Ende (5) des Anschlagkörpers (4) angeordnet sind, so dass der Kolben (2) beim Eindringen des Kolbens (2) in das Innere der im Anschlagkörper (4) gebildeten Aufnahme (6) allmählich die Öffnungen (10) bedeckt.

3. Anschlagsystem nach Anspruch 1, **dadurch gekennzeichnet, dass** die Position der Öffnungen (10) derart ist, dass der Kolben (2) am Hubende in der Aufnahme (6) sämtliche Öffnungen (10) bedeckt.

4. Anschlagsystem nach Anspruch 1, **dadurch gekennzeichnet, dass** der Kolben (2) und die Aufnahme (6) Abmessungen aufweisen, die dazu geeignet sind, die Zuleitung von Fluid außerhalb der Aufnahme (6) zu gestatten, wenn sich der Kolben (2) am Hubende in der Aufnahme (6) befindet.

5. Anschlagsystem nach einem der vorhergehenden Ansprüche, **dadurch gekennzeichnet, dass** die Öffnungen (10) bezüglich der Symmetrieebene des Anschlagkörpers (4) symmetrisch sind.

6. Anschlagsystem nach einem der Ansprüche 1 bis 5, **dadurch gekennzeichnet, dass** der Anschlagkörper (4) ein offenes unteres Ende (5) aufweist, wobei die erzeugte innere Aufnahme (6) die Verschiebung des Kolbens (2) gestattet, und das untere Ende des Anschlagkörpers (4) einen kegelförmigen Teil (8) aufweist.

7. Anschlagsystem nach Anspruch 6, **dadurch gekennzeichnet, dass** der Kolben (2) einen kegelförmigen oberen Teil (22) aufweist, der komplementär zu dem kegelförmigen Teil (8) des Anschlagkörpers (4) ist.
